# FASCICULE DE BREVET EUROPEEN

(11) **EP 2 771 592 B1**
(45) Date de publication et mention de la délivrance du brevet: **30.09.2015**
(21) Numéro de dépôt: 12773343.4
(22) Date de dépôt: 22.10.2012
(51) Int. Cl.: F16F 9/00

(54) **VERIN ELECTRIQUE COMPRENANT DES MOYENS DE LIMITATION D'EFFORT ET LANCEUR SPATIAL COMPRENANT UNE TUYERE SUPPORTEE PAR UN TEL VERIN**
ELEKTRISCHER STELLANTRIEB MIT BELASTUNGSBEGRENZER UND TRÄGERRAKETE MIT EINER DÜSE UNTERSTÜZT MIT EINEM SOLCHEN ANTRIEB
ELECTRIC ACTUATOR COMPRISING STRESS-LIMITING MEANS AND SPACE LAUNCHER COMPRISING A NOZZLE SUPPORTED BY SUCH AN ACTUATOR.

(30) Priorité: 24.10.2011 FR 1159610
(43) Date de publication de la demande: 03.09.2014
(73) Titulaire: Airbus Defence and Space SAS, 78130 Les Mureaux (FR)
(72) Inventeur: ABENSUR, Thierry, F-78300 Poissy (FR); PIGNIE, Gérald, F-78120 Rambouillet (FR); VERGNOL, Alizée, F-75009 Paris (FR); PEREZ-DIAGO, Susana, F-78480 Verneuil Sur Seine (FR)
(74) Mandataire: Ahner, Philippe
(86) Numéro de dépôt international: PCT/EP2012/070862
(87) Numéro de publication internationale: WO 2013/060642

(56) Documents cités:
- WO-A1-96/18040
- DE-A1-102007 004 445
- JP-A- 2010 185 577
- US-A1- 2004 084 265
- US-A1- 2009 044 645
- US-A1- 2010 193 305

## Description

### DOMAINE TECHNIQUE

La présente invention se rapporte de manière générale au domaine des vérins électriques. Le document US 2009/0044645 A1 en décrit un exemple qui divulgue le préambule de la revendication 1.

Elle concerne plus particulièrement mais non exclusivement un vérin électrique destiné à l'orientation d'une tuyère d'éjection équipant un moteur de lanceur spatial.

### ÉTAT DE LA TECHNIQUE ANTÉRIEURE

Les moteurs des lanceurs spatiaux comportent une tuyère d'éjection orientable destinée à canaliser les gaz provenant de la chambre de combustion de ces moteurs et permettant d'orienter le jet de ces gaz et donc la poussée produite par ces gaz afin de maîtriser la trajectoire du lanceur spatial.

La tuyère d'un moteur de lanceur spatial est en général supportée par des vérins de pilotage fixés sur le moteur, qui sont habituellement au nombre de deux.

Lors de l'allumage du moteur, ou lors de son extinction en cas de tir avorté, le champ de pression à l'intérieur du moteur n'est pas axisymétrique pendant un court laps de temps, de l'ordre de quelques secondes, ce qui induit un couple exercé sur le moteur et donc des efforts relativement intenses sur les vérins de pilotage de la tuyère de celui-ci.

Le niveau maximal que ces efforts sont susceptibles d'atteindre n'étant pas prévisible avec une bonne précision, les vérins doivent être surdimensionnés pour satisfaire les exigences de sécurité, ce qui est pénalisant en terme de masse et de coût.

De plus, l'utilisation de vérins hydrauliques entraîne des coûts de mise en oeuvre avant vol relativement élevés, de sorte qu'il serait souhaitable de pouvoir leur substituer des vérins électromécaniques, moins coûteux à mettre en oeuvre. De plus, il existe à l'heure actuelle des sources d'alimentation électrique suffisamment compactes et légères pour ce type d'application.

Toutefois, des vérins électromécaniques doivent être largement surdimensionnés pour tenir ce type d'efforts transitoires et peuvent de plus présenter des risques de grippage, ce qui rend cette solution peu intéressante.

Il existe donc un besoin pour un nouveau type de vérin électromécanique qui soit relativement compact et léger tout en étant capable de résister à des efforts mécaniques relativement intenses.

### EXPOSÉ DE L'INVENTION

L'invention a notamment pour but d'apporter une solution simple, économique et efficace à ce problème.

Elle a en particulier pour objet un vérin électromécanique capable d'encaisser des efforts d'un niveau relativement élevé, tels que ceux qui sont susceptibles d'être transmis par la tuyère d'un moteur de lanceur spatial aux vérins de pilotage de cette tuyère lorsque ce moteur est en fonctionnement au sol, en particulier au cours des phases d'allumage et d'extinction.

L'invention propose à cet effet un vérin électromécanique, destiné au déplacement d'un premier élément par rapport à un second élément, et comprenant un organe mobile pourvu de moyens de liaison destinés à être fixés audit premier élément, et un châssis pourvu de moyens de fixation destinés à être fixés audit second élément, et par rapport auquel l'organe mobile est déplaçable en translation.

Selon l'invention, le vérin comprend en outre au moins une structure d'absorption-dissipation d'énergie mécanique située sur un chemin d'efforts entre ledit premier élément et le châssis du vérin, et comprenant une chambre déformable contenant au moins une matrice capillaire poreuse à porosité ouverte et un liquide associé présentant un angle de mouillage supérieur à 90 degrés vis-à-vis de ladite matrice et choisi de sorte qu'une partie au moins de ce liquide pénètre dans les pores de la matrice, lorsque la chambre est soumise à une pression mécanique extérieure supérieure ou égale à un premier niveau de pression, et est spontanément rejeté hors des pores de la matrice par capillarité, lorsque la chambre est soumise à une pression mécanique extérieure inférieure à un second niveau de pression qui est lui-même inférieur audit premier niveau de pression.

Des exemples de structures d'absorption-dissipation d'énergie mécanique de ce type sont décrits en détail dans la demande de brevet WO 96/18040.

D'une manière générale, les structures d'absorption-dissipation d'énergie de ce type mettent à profit la tension superficielle du liquide à l'interface avec le matériau qui constitue la matrice capillaire poreuse précitée et qui est lyophobe à l'égard dudit liquide. Elles mettent plus particulièrement à profit le fait que la surface de mouillage, c'est-à-dire la surface de séparation entre liquide et solide, s'accroît au cours de l'intrusion du liquide dans les pores de la matrice et décroît au cours de l'extrusion du liquide hors des pores de cette matrice de sorte que de l'énergie est accumulée dans la structure au cours de l'intrusion du liquide et en est libérée au cours de l'extrusion de ce liquide.

Dans ce type de structures, l'intrusion du liquide se fait à pression sensiblement constante dès que la pression appliquée à la chambre déformable dépasse un seuil de pression correspondant au premier niveau de pression précité, et l'extrusion de ce liquide se fait également à pression sensiblement constante dès que la pression appliquée à la chambre déformable redevient inférieure au deuxième niveau de pression précité, comme cela apparaîtra plus clairement dans ce qui suit.

Les deux niveaux de pression précités, qui correspondent respectivement au début de l'intrusion du liquide dans les pores de la matrice capillaire poreuse et à l'extrusion du liquide hors de ces pores, sont déterminés par le choix du liquide et par le choix du matériau constituant la matrice capillaire poreuse ainsi que par la conformation des pores de celle-ci. Il est à noter que le premier niveau de pression précité est sensiblement égal à la pression capillaire de Laplace donnée par la formule P = (2σ. Cos θ)/r, où σ est la tension superficielle du liquide à la température considérée, θ est l'angle de contact ou de mouillage, et r est le rayon du canal capillaire formé par les pores de la matrice capillaire poreuse.

La structure d'absorption-dissipation d'énergie présente une hystérésis d'autant plus forte que la différence entre les deux niveaux de pression précités est grande.

Le matériau constituant la matrice capillaire poreuse peut par exemple être choisi parmi les silicates, par exemple parmi les zéolithes. Ce matériau peut également être du gel de silice, parfois appelé Silicagel. Le liquide associé peut par exemple être de l'eau ou un alliage de Gallium, d'Indium et d'Etain appelé Galinstan. D'autres exemples de matériaux pour la matrice et de liquides associés sont connus du document WO 96/18040 précité.

D'une manière générale, le matériau formant la matrice capillaire poreuse peut être intrinsèquement lyophobe à l'égard du liquide associé ou cette matrice peut être recouverte d'un traitement pour la rendre lyophobe.

Par ailleurs, la matrice capillaire est de préférence constituée de grains ou de billes lyophobes ayant un diamètre micrométrique et des pores nanométriques. La matrice capillaire peut ainsi prendre la forme d'une poudre constituée de grains ou d'un gel constitué de billes. L'association de la matrice capillaire poreuse et du liquide associé forme un colloïde, parfois appelé « système hétérogène lyophobe », qui constitue la structure d'absorption-dissipation d'énergie précitée.

Le colloïde peut être directement disposé dans ladite chambre déformable.

En variante, le colloïde peut être contenu dans un ou plusieurs sachets disposés dans la chambre déformable, de préférence immergés dans un fluide tel que de l'huile contenu dans cette chambre déformable.

D'une manière générale, la structure d'absorption-dissipation d'énergie permet de limiter le niveau des efforts risquant d'être transmis au châssis du vérin par le premier élément précité via l'organe mobile du vérin. En effet, lorsque de tels efforts conduisent à l'atteinte du premier niveau de pression précité, l'énergie résultant de ces efforts est accumulée par la structure au cours de l'intrusion du liquide dans les pores de la matrice capillaire poreuse de sorte que des efforts d'un niveau supérieur audit premier niveau de pression ne risquent pas d'être transmis au châssis du vérin.

Lorsque le vérin selon l'invention est utilisé pour le pilotage d'une tuyère de moteur de lanceur spatial, auquel cas le premier élément précité est ladite tuyère et le second élément précité est un élément fixe du moteur d'un lanceur spatial, ce vérin peut alors être dimensionné de manière à supporter les niveaux d'efforts pouvant survenir nominalement en vol dans ce type d'application, et non pas pour supporter le niveau des efforts transitoires d'allumage et d'extinction du moteur, qui peuvent être beaucoup plus élevés.

L'invention permet donc d'éviter le recours à des vérins électromécaniques surdimensionnés de manière à supporter des efforts transitoires élevés et d'occurrence aléatoire, et permet ainsi l'utilisation de vérins électromécaniques de dimensions et de masse relativement modérées.

Le châssis du vérin prend avantageusement la forme d'un cylindre, et l'organe mobile de ce vérin prend avantageusement la forme d'une tige.

En variante, d'autres conformations de châssis et/ou d'organe mobile sont néanmoins possibles sans sortir du cadre de la présente invention.

En outre, la structure d'absorption-dissipation d'énergie peut comprendre plusieurs matrices capillaires poreuses constituées de matériaux différents et associées à un même liquide ou à des liquides respectifs différents. Les différents colloïdes ainsi formés sont de préférence contenus dans des chambres déformables distinctes.

Préférentiellement, chaque structure d'absorption-dissipation d'énergie du vérin est logée à l'intérieur d'une cavité traversée au moins en partie par l'organe mobile du vérin et est interposée entre une paroi de cette cavité et des moyens de transmission d'efforts qui sont susceptibles d'exercer une pression contre la chambre déformable de ladite structure d'absorption-dissipation d'énergie pour transmettre des efforts entre le premier élément précité et le châssis du vérin.

La chambre déformable de chaque structure d'absorption-dissipation d'énergie est avantageusement délimitée, à l'intérieur de ladite cavité, par un élément d'étanchéité qui est par exemple formé d'un bouchon monté coulissant à étanchéité à l'intérieur de la cavité selon un principe cylindre-piston.

En variante, l'élément d'étanchéité peut prendre la forme d'un soufflet déformable.

De plus, chaque structure d'absorption-dissipation d'énergie du vérin est de préférence agencée dans un fond de ladite cavité.

Dans un premier et un deuxième modes de réalisation de l'invention, les moyens de transmission d'efforts sont portés par l'organe mobile du vérin. Ces moyens de transmission d'efforts sont ainsi solidaires de cet organe mobile.

Dans le premier mode de réalisation de l'invention, lesdits moyens de liaison de l'organe mobile audit premier élément comprennent un corps creux monté coulissant sur l'organe mobile et dans lequel est ménagée la cavité précitée.

Ainsi, chaque structure d'absorption-dissipation d'énergie permet de limiter en permanence le niveau des efforts transmis par ledit premier élément au châssis du vérin par l'intermédiaire de l'organe mobile de ce vérin, quelle que soit la course de cet organe mobile par rapport au châssis du vérin.

Dans ce premier mode de réalisation de l'invention, les moyens de transmission d'efforts prennent de préférence la forme d'une plaque, par exemple de forme cylindrique.

De plus, l'organe mobile du vérin est avantageusement commandé par une unité d'entraînement solidaire du châssis du vérin.

Dans le deuxième mode de réalisation de l'invention, le châssis du vérin comprend un corps creux dans lequel est ménagée ladite cavité, et une unité d'entraînement de l'organe mobile du vérin est logée fixement dans cette cavité.

Dans ce cas, chaque structure d'absorption-dissipation d'énergie du vérin est donc logée à l'intérieur du corps creux du châssis.

Chaque structure d'absorption-dissipation d'énergie du vérin est alors de préférence disposée de manière à pouvoir être sollicitée par les moyens de transmission d'efforts lorsque l'organe mobile du vérin est en bout de course.

Dans un troisième mode de réalisation de l'invention, le châssis du vérin comprend un corps creux dans lequel est ménagée ladite cavité, et les moyens de transmission d'efforts participent au support d'une unité d'entraînement de l'organe mobile du vérin à l'intérieur de cette cavité.

Dans ce cas, comme dans le cas du premier mode de réalisation précité, chaque structure d'absorption-dissipation d'énergie du vérin est susceptible d'être sollicitée et donc de limiter les efforts transmis au châssis du vérin quelle que soit la course de l'organe mobile du vérin.

Dans les deuxième et troisième modes de réalisation précités, les moyens de transmission d'efforts comprennent de préférence une ou plusieurs plaque respectivement associées à chaque structure d'absorption-dissipation d'énergie et chacune agencée entre ladite unité d'entraînement et ladite structure d'absorption-dissipation d'énergie associée.

D'une manière générale, le vérin électromécanique comprend avantageusement deux structures d'absorption-dissipation d'énergie mécanique situées chacune sur un chemin d'efforts respectif entre ledit premier élément et le châssis du vérin et comprenant chacune une chambre déformable contenant au moins une matrice capillaire poreuse à porosité ouverte et un liquide associé présentant un angle de mouillage supérieur à 90 degrés vis-à-vis de ladite matrice et choisi de sorte qu'une partie au moins dudit liquide pénètre dans les pores de la matrice, lorsque ladite chambre est soumise à une pression mécanique extérieure supérieure ou égale à un premier niveau de pression, et est spontanément rejeté hors des pores de la matrice, lorsque ladite chambre est soumise à une pression mécanique extérieure inférieure à un second niveau de pression, inférieur audit premier niveau de pression, lesdites structures d'absorption-dissipation d'énergie étant disposées de part et d'autre desdits moyens de transmission d'efforts de sorte que ledit premier élément puisse solliciter ces structures selon deux directions respectives opposées.

L'invention concerne également un moteur pour lanceur spatial, comportant au moins une tuyère d'éjection, ainsi qu'au moins un vérin électromécanique du type décrit ci-dessus pour assurer le support et l'orientation de cette tuyère d'éjection.

D'une manière connue en soi, le nombre de vérins assurant le pilotage de la tuyère d'éjection précitée est par exemple égal à deux. Deux vérins peuvent en effet être suffisants pour assurer l'orientation d'une telle tuyère.

L'invention concerne aussi un étage de lanceur spatial, comprenant au moins un moteur du type, décrit ci-dessus.

L'invention concerne encore un lanceur spatial, comprenant au moins un étage du type décrit ci-dessus.

### BRÈVE DESCRIPTION DES DESSINS

L'invention sera mieux comprise, et d'autres détails de celle-ci apparaîtront à la lecture de la description suivante, faite à titre d'exemple non limitatif et en référence aux dessins annexés dans lesquels :
- la figure 1 est une vue schématique en coupe axiale d'un vérin électromécanique selon un premier mode de réalisation de l'invention ;
- la figure 2 est une vue schématique partielle en coupe axiale illustrant une variante de réalisation du vérin de la figure 1;
- la figure 3 est une vue schématique en coupe axiale d'un vérin électromécanique selon un deuxième mode de réalisation de l'invention ;
- la figure 4 est une vue schématique en coupe axiale d'un vérin électromécanique selon un troisième mode de réalisation de l'invention.

Dans l'ensemble de ces figures, des références identiques peuvent désigner des éléments identiques ou analogues.

### EXPOSÉ DÉTAILLÉ DE MODES DE RÉALISATION PREFERES

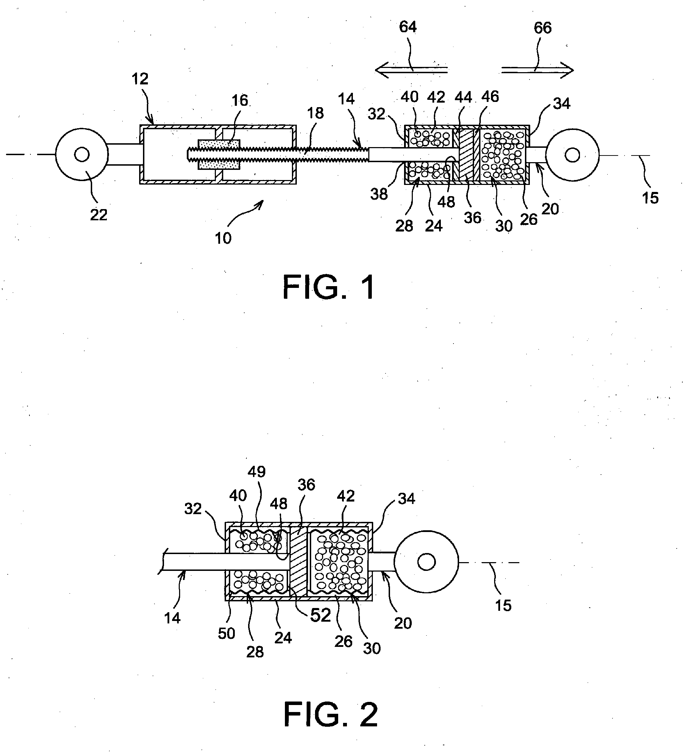

La figure 1 représente un vérin électromécanique 10 comprenant un châssis 12, un organe mobile 14 globalement en forme de tige et déplaçable en translation par rapport au châssis 12 selon un axe longitudinal 15 du vérin, ainsi qu'une unité d'entraînement 16, logée à l'intérieur du châssis 12 en étant solidaire de celui-ci, et destinée au pilotage de l'organe mobile 14.

L'unité d'entraînement 16 est d'un type conventionnel et comporte par exemple des moyens coopérant avec une partie filetée 18 de l'organe mobile 14 selon un mécanisme vis-écrou à roulement à billes pour permettre un asservissement en position de l'organe mobile 14.

L'organe mobile 14 est pourvu de moyens de liaison 20 destinés à être fixés à un premier élément que le vérin 10 a pour objet de piloter par rapport à un second élément, les premier et second éléments n'étant pas illustrés sur les figures. Le châssis 12 comporte des moyens de fixation 22 destinés à la fixation de ce châssis 12 au second élément précité.

Dans le premier mode de réalisation de l'invention représenté sur la figure 1, les moyens de liaison 20 portés par l'organe mobile 14 comprennent un corps creux 24 de forme allongée s'étendant parallèlement à un axe longitudinal 15 du vérin 10 et définissant une cavité 26, ainsi que deux structures d'absorption-dissipation d'énergie 28 et 30 disposées respectivement au contact de deux fonds opposés 32 et 34 de la cavité 26 et destinées à limiter la transmission d'efforts longitudinaux à l'organe mobile 14, comme cela apparaîtra plus clairement dans ce qui suit.

L'organe mobile 14 comporte une tête d'extrémité 36, prenant la forme d'une plaque, qui est montée coulissante à l'intérieur de la cavité 26 et est interposée entre les deux structures d'absorption-dissipation d'énergie 28 et 30 précitées. Cette tête d'extrémité 36 forme un moyen de transmission d'efforts, comme cela apparaîtra plus clairement dans ce qui suit.

L'organe mobile 14 traverse l'une 28 des structures d'absorption-dissipation d'énergie, qui est disposée du côté du châssis 12 du vérin, ainsi qu'un orifice de forme conjuguée 38 formé dans le fond 32 correspondant de la cavité 26.

Chacune des structures d'absorption-dissipation d'énergie 28 et 30 comporte une poudre formée d'une pluralité de grains 40 présentant une structure poreuse à porosité ouverte, ainsi qu'un liquide 42 associé au regard duquel les grains 40 sont lyophobes, au sens où le liquide 42 présente un angle de mouillage supérieur à 90 degrés vis-à-vis de ces grains 40.

La poudre constituée des grains 40 constitue une matrice capillaire poreuse dans la terminologie de la présente invention. Cette poudre et le liquide 42 forment un colloïde.

Le colloïde de chaque structure d'absorption-dissipation d'énergie 28, 30 est enfermé dans une chambre déformable de ladite structure, qui est définie à l'intérieur de la cavité 26 du corps creux 24 en étant délimitée conjointement par ce corps creux 24 et par un élément d'étanchéité 44, 46 logé dans ce corps creux 24 en étant interposé entre ladite structure 28, 30 et la tête d'extrémité 36 de l'organe mobile 14. L'élément d'étanchéité 44 de la structure d'absorption-dissipation d'énergie 28, qui est disposée du côté de l'organe mobile 14, comporte au moins un orifice 48 qui est traversé à étanchéité par l'organe mobile 14.

D'une manière générale, pour chacune des structures d'absorption-dissipation d'énergie 28 et 30, le liquide 42 est choisi de sorte qu'une partie au moins de ce liquide pénètre dans les pores des grains 40, lorsque la tête 36 de l'organe mobile 14 soumet la chambre déformable de ladite structure d'absorption-dissipation d'énergie à une pression mécanique supérieure ou égale à un premier niveau de pression P1, et est spontanément rejetée hors de ces pores par capillarité et maintenue hors de ces derniers, lorsque la tête 36 de l'organe mobile 14 soumet la chambre déformable de la structure d'absorption-dissipation d'énergie à une pression mécanique inférieure à un second niveau de pression P2 qui est inférieur audit premier niveau de pression P1.

A cet effet, les grains 40 peuvent être constitués d'un matériau hydrophobe naturel ou synthétique, par exemple de la famille des zéolithes, tandis que le liquide associé 42 est par exemple constitué d'eau.

Il est à noter que le premier niveau de pression P1 précité est sensiblement égal à la pression capillaire de Laplace, comme expliqué ci-dessus.

Dans l'exemple représenté sur la figure 1, chaque élément d'étanchéité 44,46 se présente sous la forme d'un simple bouchon monté coulissant à étanchéité dans la cavité 26 du corps creux 24 selon le principe cylindre-piston, de manière à pouvoir être sollicité selon la direction longitudinale par la tête d'extrémité 36 de l'organe mobile 14 et à pouvoir alors comprimer l'ensemble formé par les billes 40 et le liquide associé 42. Dans ce cas, chaque élément d'étanchéité 44, 46 forme un joint d'étanchéité glissant.

En variante, d'autres conformations d'éléments d'étanchéité sont possibles dans le cadre de la présente invention pour délimiter la chambre déformable de chaque structure d'absorption-dissipation d'énergie 28, 30.

Chaque élément d'étanchéité peut par exemple prendre la forme d'un soufflet 49 du type illustré sur la figure 2, comportant une extrémité ouverte 50 raccordée fixement au fond 32, 34 correspondant de la cavité 26, ainsi qu'une paroi de fermeture 52 de son extrémité opposée, par exemple de forme plane et s'étendant parallèlement au fond 32, 34 précité.

Dans ce cas, une pression exercée par la tête d'extrémité 36 sur la paroi de fermeture 52 de l'un des soufflets 49 est susceptible d'induire une compression de ce soufflet 49 et donc de la chambre déformable délimitée par celui-ci et de l'ensemble formé par les grains 40 et le liquide associé 42 contenus dans ladite chambre.

En fonctionnement, les structures d'absorption-dissipation d'énergie 28 et 30 des moyens de liaison 20 permettent de limiter les efforts longitudinaux, qui sont transmis par ces moyens de liaison 20 au châssis 12 du vérin 10, à un niveau sensiblement égal au premier niveau de pression P1.

En effet, lorsque la pression appliquée par la tête d'extrémité 36 de l'organe mobile 14 sur l'élément d'étanchéité 44, 46 de l'une des structures d'absorption-dissipation d'énergie 28, 30 est inférieure au premier niveau de pression P1, cette structure d'absorption-dissipation d'énergie se comporte sensiblement comme une structure incompressible.

En revanche, dès que cette pression atteint le premier niveau de pression P1, le liquide 42 pénètre dans les pores des grains 40, ce qui se traduit par un stockage d'énergie dans cette structure d'absorption-dissipation d'énergie. Au cours de cette phase, la pression appliquée par la tête d'extrémité 36 de l'organe mobile 14 sur ledit élément d'étanchéité 44, 46 demeure sensiblement constante.

Lorsque cette pression devient inférieure au second niveau de pression P2 précité, qui est inférieur au premier niveau de pression P1, le liquide 42 est spontanément rejeté hors des pores des grains 40 par capillarité, de sorte qu'une partie au moins de l'énergie précédemment stockée dans la structure d'absorption-dissipation d'énergie est restituée à l'organe mobile 14, mais à une pression inférieure au premier niveau de pression P1.

Au final, les efforts longitudinaux transmis par les moyens de liaison 20 à l'organe mobile 14 sont donc bien limités au premier niveau de pression P1 précité.

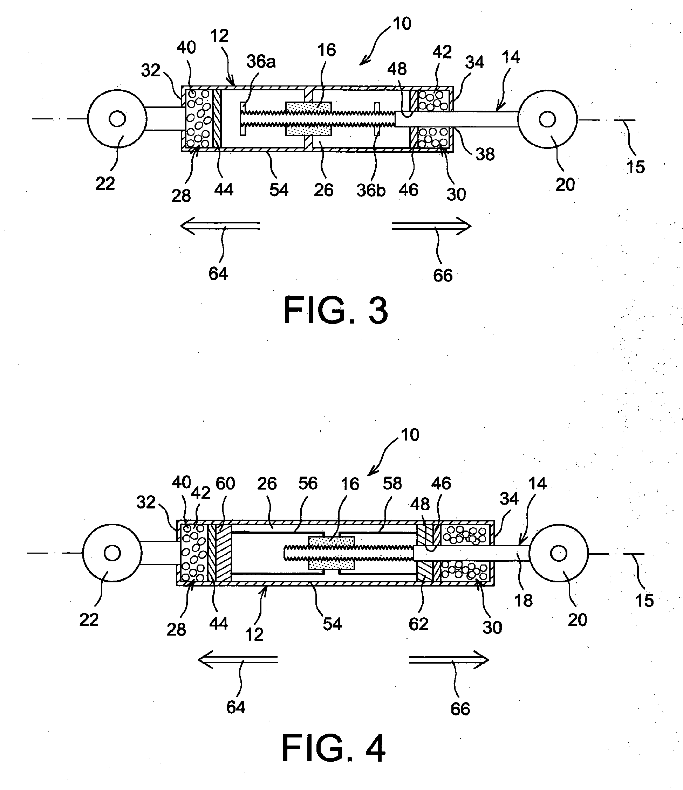

La figure 3 représente un vérin électromécanique 10 selon un deuxième mode de réalisation de l'invention.

Ce vérin diffère du vérin de la figure 1 du fait que la cavité 26 n'est pas définie dans un corps creux indépendant du châssis 12 et faisant partie des moyens de liaison 20. En effet, cette cavité 26 est ici définie à l'intérieur d'un corps creux 54 faisant partie du châssis 12 du vérin, et l'unité d'entraînement 16 de l'organe mobile 14 est logée fixement à l'intérieur de cette cavité 26.

Dans ce deuxième mode de réalisation, l'organe mobile 14 porte deux plaques 36a et 36b agencées de part et d'autre de l'unité d'entraînement 16, chacune en regard d'une structure d'absorption-dissipation d'énergie 28, 30 correspondante, ces deux plaques 36a et 36b formant des moyens de transmission d'efforts à l'instar de la plaque 36 de la figure 1.

Ainsi, lorsque l'organe mobile 14 subit des efforts induits par le premier élément auquel cet organe mobile 14 est relié, ce dernier peut se déplacer en bout de course si ces efforts sont d'un niveau suffisant, de sorte que l'une des plaques 36a et 36b peut entrer en contact avec la structure d'absorption-dissipation d'énergie 28, 30 correspondante.

Le niveau des efforts précités est ainsi limité à une valeur sensiblement égale à celle du premier niveau de pression P1, d'une manière analogue à ce qui a été expliqué ci-dessus, à ceci près que l'organe mobile 14 doit se déplacer en bout de course avant l'entrée en action des structures d'absorption-dissipation d'énergie. Autrement dit, si les efforts appliqués à l'organe mobile 14 par le premier élément ne permettent pas d'amener cet organe mobile 14 en bout de course, compte tenu de la puissance et du temps de réponse de l'unité d'entraînement 16, alors les structures d'absorption-dissipation d'énergie 28 et 30 ne rentrent pas en action. Ces structures sont donc dans ce cas utilisées comme des butées mécaniques de fin de course.

La figure 4 représente un vérin électromécanique 10 selon un troisième mode de réalisation de l'invention, dans lequel l'unité d'entraînement 16 n'est pas fixe par rapport au châssis 12 mais est supportée à l'intérieur de la cavité 26 du corps 54 du châssis au moyen des deux structures d'absorption-dissipation d'énergie 28 et 30.

Plus précisément, le vérin 10 comporte deux structures de support 56 et 58 disposées axialement de chaque côté de l'unité d'entraînement 16 et reliées chacune à cette unité d'entraînement 16 et à une plaque correspondante 60, 62 qui est montée coulissante dans la cavité 26 du corps creux 54 du châssis 12 et qui est appliquée contre l'élément d'étanchéité 44, 46 délimitant la chambre déformable de la structure d'absorption-dissipation d'énergie 28, 30 correspondante.

Ainsi, l'unité d'entraînement 16 est maintenue en position longitudinalement par les deux structures d'absorption-dissipation d'énergie 28, 30 et par les structures de support 56 et 58 précitées.

Il est à noter que les plaques 60 et 62 forment des moyens de transmission d'efforts à l'instar des plaques 36, 36a, 36b des figures 1 et 3.

Lorsque des efforts selon l'axe 15 du vérin sont communiqués par le premier élément à l'organe mobile 14 puis par ce dernier à l'unité d'entraînement 16, cette dernière peut transmettre ces efforts via la plaque 60 ou 62 correspondante à la structure d'absorption-dissipation d'énergie 28 ou 30 correspondante qui agit alors en limiteur d'effort de la manière expliquée ci-dessus.

Il est à noter que l'élément d'étanchéité 44, 46 de chaque structure d'absorption-dissipation d'énergie 28, 30 des vérins 10 selon les deuxième et troisième modes de réalisation décrits ci-dessus peut également prendre différentes conformations dont par exemple celle représentée sur la figure 2.

Dans les trois modes de réalisation décrits ci-dessus, les structures d'absorption-dissipation d'énergie 28, 30 sont agencées chacune sur un chemin d'efforts entre le premier élément, relié à l'organe mobile 14, et le châssis 12 du vérin, de manière à pouvoir être sollicitées par les moyens de transmission d'efforts 36, 36a, 36b, 60, 62 selon la direction longitudinale dans deux sens respectifs opposés, symbolisés par les flèches 64 et 66 (figures 1, 3 et 4).

D'une manière générale, le vérin 10 selon l'invention présente un encombrement et une masse relativement réduits tout en étant capable de supporter des efforts relativement intenses, grâce à l'effet de limitation d'efforts produit par les structures d'absorption-dissipation d'énergie intégrées à ce vérin.

Le vérin 10 selon le premier mode de réalisation de l'invention décrit ci-dessus en référence à la figure 1 peut être d'un encombrement particulièrement réduit du fait que les structures d'absorption-dissipation d'énergie de ce vérin ne sont pas disposées dans le châssis 12 de celui-ci mais dans les moyens de liaison 20 montés sur l'organe mobile 14 et indépendants du châssis 12.

Etant donné que les structures d'absorption-dissipation d'énergie de ce vérin 10 sont dans la chaîne des efforts en permanence, quelle que soit la course de l'organe mobile 14, la sollicitation de l'unité d'entraînement 16 par l'organe mobile 14 peut être minimisée de manière optimale.

Toutefois, cela rend souhaitable que le comportement dynamique des structures d'absorption-dissipation d'énergie soit déterminé avec la meilleure précision possible étant donné que ces structures modifient la dynamique globale du vérin. Or, ces structures ne doivent pas impacter le fonctionnement et le pilotage du vérin en mode nominal, c'est-à-dire en l'absence d'efforts transitoires élevés.

D'une manière générale, le vérin 10 selon l'invention est de préférence dimensionné de sorte que le niveau des efforts appliqués sur celui-ci en mode nominal, notamment en phase de vol, ne dépasse pas le niveau de pression d'intrusion P1. Dans ces conditions, le colloïde de chaque structure d'absorption-dissipation d'énergie se comporte dynamiquement comme le liquide qui le compose, qui est de préférence quasi-incompressible. Dans ce cas, les structures d'absorption-dissipation d'énergie, même appliquées systématiquement en série sur le chemin d'efforts du vérin, ne perturbent donc pas la dynamique du pilotage de ce vérin en mode nominal.

Le vérin 10 selon le deuxième mode de réalisation de l'invention présente l'avantage que les structures d'absorption-dissipation d'énergie n'agissent que lorsque l'organe mobile 14 arrive en fin de course, de sorte que la présence de ces structures ne modifie pas le comportement du vérin en fonctionnement nominal.

Cela peut être avantageux notamment si les structures d'absorption-dissipation d'énergie comprennent un liquide compressible tel qu'une huile.

De plus, la connaissance précise du comportement dynamique des structures d'absorption-dissipation d'énergie apparaît secondaire dans ce cas.

## Revendications

1. Vérin électromécanique (10), destiné au déplacement d'un premier élément par rapport à un second élément, et comprenant un organe mobile (14) pourvu de moyens de liaison (20) destinés à être fixés audit premier élément, et un châssis (12) pourvu de moyens de fixation (22) destinés à être fixés audit second élément et par rapport auquel ledit organe mobile (14) est déplaçable en translation, ledit vérin (10) étant **caractérisé en ce qu'**il comprend en outre au moins une structure d'absorption-dissipation d'énergie mécanique (28, 30) située sur un chemin d'efforts entre ledit premier élément et ledit châssis (12) du vérin (10) et comprenant une chambre déformable contenant au moins une matrice capillaire poreuse (40) à porosité ouverte et un liquide (42) associé présentant un angle de mouillage supérieur à 90 degrés vis-à-vis de ladite matrice (40) et choisi de sorte qu'une partie au moins dudit liquide (42) pénètre dans les pores de ladite matrice (40), lorsque ladite chambre est soumise à une pression mécanique extérieure supérieure ou égale à un premier niveau de pression P1, et est spontanément rejeté hors des pores de ladite matrice (40) par capillarité, lorsque ladite chambre est soumise à une pression mécanique extérieure inférieure à un second niveau de pression P2 qui est inférieur audit premier niveau de pression P1.

2. Vérin selon la revendication 1, **caractérisé en ce que** chaque structure d'absorption-dissipation d'énergie (28, 30) du vérin (10) est logée à l'intérieur d'une cavité (26) traversée au moins en partie par ledit organe mobile (14) du vérin (10) et est interposée entre une paroi (32, 34) de ladite cavité (26) et des moyens de transmission d'efforts (36, 36a, 36b, 60, 62) qui sont susceptibles d'exercer une pression contre la chambre déformable de ladite structure d'absorption-dissipation d'énergie (28, 30) pour transmettre des efforts entre ledit premier élément et ledit châssis (12) du vérin (10).

3. Vérin selon la revendication 2, **caractérisé en ce que** lesdits moyens de transmission d'efforts (36, 36a, 36b) sont portés par ledit organe mobile (14).

4. Vérin selon la revendication 3, **caractérisé en ce que** lesdits moyens de liaison (20) dudit organe mobile (14) audit premier élément comprennent un corps creux (24) monté coulissant sur ledit organe mobile (14) et dans lequel est ménagée ladite cavité (26).

5. Vérin selon la revendication 3, **caractérisé en ce que** ledit châssis (12) comprend un corps creux (54) dans lequel est ménagée ladite cavité (26) et **en ce qu'**une unité d'entraînement (16) dudit organe mobile (14) est logée fixement dans ladite cavité (26).

6. Vérin selon la revendication 2, **caractérisé en ce que** ledit châssis (12) comprend un corps creux (54) dans lequel est ménagée ladite cavité (26) et **en ce que** lesdits moyens de transmission d'efforts (60, 62) participent au support d'une unité d'entraînement (16) dudit organe mobile (14) à l'intérieur de ladite cavité (26).

7. Vérin selon la revendication 5 ou 6, **caractérisé en ce que** lesdits moyens de transmission d'efforts comprennent une ou plusieurs plaques (36a, 36b, 60, 62) respectivement associées à chaque structure d'absorption-dissipation d'énergie (28, 30) et chacune agencée entre ladite unité d'entraînement (16) et ladite structure d'absorption-dissipation d'énergie associée (28, 30).

8. Vérin selon l'une quelconque des revendications 2 à 7, **caractérisé en ce qu'**il comprend deux structures d'absorption-dissipation d'énergie mécanique (28, 30) situées chacune sur un chemin d'efforts respectif entre ledit premier élément et ledit châssis (12) du vérin (10) et comprenant chacune une chambre déformable contenant au moins une matrice capillaire poreuse (40) à porosité ouverte et un liquide (42) associé présentant un angle de mouillage supérieur à 90 degrés vis-à-vis de ladite matrice (40) et choisi de sorte qu'une partie au moins dudit liquide (42) pénètre dans les pores de ladite matrice (40), lorsque ladite chambre est soumise à une pression mécanique extérieure supérieure à un premier niveau de pression P1, et est spontanément rejeté hors des pores de ladite matrice (40), lorsque ladite chambre est soumise à une pression mécanique extérieure inférieure à un second niveau de pression P2, inférieur audit premier niveau de pression P1, lesdites structures d'absorption-dissipation d'énergie (28, 30) étant disposées de part et d'autre desdits moyens de transmission d'efforts (36, 36a, 36b, 60, 62) de sorte que ledit premier élément puisse solliciter lesdites structures (28, 30) selon deux directions respectives opposées (64, 66).

9. Moteur pour lanceur spatial, comportant au moins une tuyère d'éjection, **caractérisé en ce qu'**il comprend au moins un vérin électromécanique (10) selon l'une quelconque des revendications précédentes pour assurer le support et l'orientation de ladite tuyère d'éjection.

10. Etage de lanceur spatial, **caractérisé en ce qu'**il comprend au moins un moteur selon la revendication 9.

11. Lanceur spatial, **caractérisé en ce qu'**il comprend au moins un étage selon la revendication 10.

## Patentansprüche

1. Elektromechanischer Stellantrieb (10), der zur Bewegung eines ersten Elements in Bezug auf ein zweites Element bestimmt ist und der Folgendes umfasst: ein bewegliches Organ (14), das mit Verbindungsmitteln (20) versehen ist, die dazu bestimmt sind, am ersten Element befestigt zu werden, und einen Rahmen (12), der mit Befestigungsmitteln (22) versehen ist, die dazu bestimmt sind, am zweiten Element befestigt zu werden, und in Bezug auf den das bewegliche Organ (14) in Translation verschiebbar ist, wobei der Stellantrieb (10) **dadurch gekennzeichnet ist, dass** er ferner wenigstens eine Struktur zur Absorption und Dissipation von mechanischer Energie (28, 30) umfasst, die auf einem Kräfteweg zwischen dem ersten Element und dem Rahmen (12) des Stellantriebs (10) angeordnet ist und eine verformbare Kammer umfasst, die wenigstens eine poröse kapillarische Matrix (40) mit offener Porosität und eine dazugehörige Flüssigkeit (42) enthält, die einen Benetzungswinkel von über 90 Grad gegenüber der Matrix (40) aufweist und derart gewählt wird, dass wenigstens ein Teil der Flüssigkeit (42) in die Poren der Matrix (40) eindringt, wenn die Kammer einem externen mechanischen Druck ausgesetzt wird, der größer oder gleich einem ersten Druckpegel P1 ist, und die durch Kapillarwirkung spontan aus den Poren der Matrix (40) ausgestoßen wird, wenn die Kammer einem externen mechanischen Druck ausgesetzt wird, der niedriger als ein zweiter Druckpegel P2 ist, wobei dieser niedriger als der erste Druckpegel P1 ist.

2. Stellantrieb nach Anspruch 1, **dadurch gekennzeichnet, dass** jede Struktur zur Absorption und Dissipation von Energie (28, 30) des Stellantriebs (10) im Inneren eines Hohlraums (26) angeordnet ist, der wenigstens teilweise von dem beweglichen Organ (14) des Stellantriebs (10) durchquert wird, und zwischen einer Wand (32, 34) des Hohlraums (26) und Kraftübertragungsmitteln (36, 36a, 36b, 60, 62) angeordnet ist, die dafür ausgelegt sind, einen Druck auf die verformbare Kammer der Struktur zur Absorption und Dissipation von Energie (28, 30) auszuüben, um Kräfte zwischen dem ersten Element und dem Rahmen (12) des Stellantriebs (10) zu übertragen.

3. Stellantrieb nach Anspruch 2, **dadurch gekennzeichnet, dass** die Kraftübertragungsmittel (36, 36a, 36b) von dem beweglichen Organ (14) getragen werden.

4. Stellantrieb nach Anspruch 3, **dadurch gekennzeichnet, dass** die Mittel (20) zur Verbindung des beweglichen Organs (14) mit dem ersten Element einen hohlen Körper (24) umfassen, der gleitend auf dem beweglichen Organ (14) montiert ist und in dem der Hohlraum (26) gebildet ist.

5. Stellantrieb nach Anspruch 3, **dadurch gekennzeichnet, dass** der Rahmen (12) einen hohlen Körper (54) umfasst, in dem der Hohlraum (26) gebildet ist, und dass eine Antriebseinheit (16) für das bewegliche Organ (14) feststehend in dem Hohlraum (26) untergebracht ist.

6. Stellantrieb nach Anspruch 2, **dadurch gekennzeichnet, dass** der Rahmen (12) einen hohlen Körper (54) umfasst, in dem der Hohlraum (26) gebildet ist, und dass die Kraftübertragungsmittel (60, 62) beim Halten einer Antriebseinheit (16) für das bewegliche Organ (14) im Inneren des Hohlraums (26) mitwirken.

7. Stellantrieb nach Anspruch 5 oder 6, **dadurch gekennzeichnet, dass** die Kraftübertragungsmittel eine oder mehrere Platten (36a, 36b, 60, 62) umfassen, die mit jeder Struktur zur Absorption und Dissipation von Energie (28, 30) verbunden sind und jeweils zwischen der Antriebseinheit (16) und der entsprechenden Struktur zur Absorption und Dissipation von Energie (28, 30) angeordnet sind.

8. Stellantrieb nach einem der Ansprüche 2 bis 7, **dadurch gekennzeichnet, dass** er zwei Strukturen zur Absorption und Dissipation von mechanischer Energie (28, 30) umfasst, die jeweils auf einem jeweiligen Kräfteweg zwischen dem ersten Element und dem Rahmen (12) des Stellantriebs (10) angeordnet sind und jeweils eine verformbare Kammer umfassen, die wenigstens eine poröse kapillarische Matrix (40) mit offener Porosität und eine dazugehörige Flüssigkeit (42) enthält, die einen Benetzungswinkel von über 90 Grad gegenüber der Matrix (40) aufweist und derart gewählt wird, dass wenigstens ein Teil der Flüssigkeit (42) in die Poren der Matrix (40) eindringt, wenn die Kammer einem externen mechanischen Druck ausgesetzt wird, der höher als ein erster Druckpegel P1 ist, und die spontan aus den Poren der Matrix (40) ausgestoßen wird, wenn die Kammer einem externen mechanischen Druck ausgesetzt wird, der niedriger als ein zweiter Druckpegel P2 ist, wobei dieser niedriger als der erste Druckpegel P1 ist, wobei die Strukturen zur Absorption und Dissipation von Energie (28, 30) derart zu beiden Seiten der Kraftübertragungsmittel (36, 36a, 36b, 60, 62) angeordnet sind, dass das erste Element die Strukturen (28, 30) in zwei jeweils entgegengesetzten Richtungen (64, 66) belasten kann.

9. Triebwerk für Trägerrakete, umfassend wenigstens eine Schubdüse, **dadurch gekennzeichnet, dass** es wenigstens einen elektromechanischen Stellantrieb (10) nach einem der vorhergehenden Ansprüche umfasst, um den Halt und die Ausrichtung der Schubdüse zu gewährleisten.

10. Trägerraketenstufe, **dadurch gekennzeichnet, dass** sie wenigstens ein Triebwerk nach Anspruch 9 umfasst.

11. Trägerrakete, **dadurch gekennzeichnet, dass** sie wenigstens eine Stufe nach Anspruch 10 umfasst.

## Claims

1. An electromechanical actuator (10), for moving a first element with respect to a second element, and comprising a movable member (14) provided with connecting means (20) for being attached to said first element, and a frame (12) provided with attaching means (22) for being attached to said second element, wherein said movable member (14) is translationally movable with respect to said frame, said actuator (10) being **characterised in that** it further comprises at least one mechanical energy absorbing-dissipating structure (28, 30) located on a strain path between said first element and said frame (12) of the actuator (10) and comprising a deformable chamber containing at least one porous capillary matrix (40) having open pores and an associated liquid (42) having a wetting angle higher than 90 degrees relative to said matrix (40) and selected such that at least part of said liquid (42) penetrates the pores of said matrix (40), when said chamber is subjected to an external mechanical pressure equal to or higher than a first pressure level P1, and is spontaneously rejected off the pores of said matrix (40) by capillary action, when said chamber is subjected to an external mechanical pressure lower than a second pressure level P2 which is lower than said first pressure level P1.

2. The actuator according to claim 1, **characterised in that** each energy absorbing-dissipating structure (28, 30) of the actuator (10) is accommodated inside a cavity (26) through which said movable member (14) of the actuator (10) passes at least partly, and is interposed between a wall (32, 34) of said cavity (26) and strain transmitting means (36, 36a, 36b, 60, 62) which are likely to exert a pressure against the deformable chamber of said energy absorbing-dissipating structure (28, 30) for transmitting strains between said first element and said frame (12) of the actuator (10).

3. The actuator according to claim 2, **characterised in that** said strain transmitting means (36, 36a, 36b) are carried by said movable member (14).

4. The actuator according to claim 3, **characterised in that** said connecting means (20) of said movable member (14) to said first element comprise a hollow body (24) slidingly mounted on said movable member (14) and inside which said cavity (26) is provided.

5. The actuator according to claim 3, **characterised in that** said frame (12) comprises a hollow body (54) inside which said cavity (26) is provided and **in that** a driving unit (16) for driving said movable member (14) is fixedly accommodated in said cavity (26).

6. The actuator according to claim 2, **characterised in that** said frame (12) comprises a hollow body (54) inside which said cavity (26) is provided, and **in that** said strain transmitting means (60, 62) aid in supporting a driving unit (16) for driving said movable member (14) inside said cavity (26).

7. The actuator according to claim 5 or 6, **characterised in that** said strain transmitting means comprise one or more plates (36a, 36b, 60, 62) respectively associated with each energy absorbing-dissipating structure (28, 30) and each arranged between said driving unit (16) and said associated energy absorbing-dissipating structure (28, 30).

8. The actuator according to any of claims 2 to 7, **characterised in that** it comprises two mechanical energy absorbing-dissipating structures (28, 30) each located on a respective strain path between said first element and said frame (12) of the actuator (10) and each comprising a deformable chamber containing at least one porous capillary matrix (40) having open pores and an associated liquid (42) having a wetting angle higher than 90 degrees relative to said matrix (40) and selected such that at least part of said liquid (42) penetrates the pores of said matrix (40), when said chamber is subjected to an external mechanical pressure higher than a first pressure level P1, and is spontaneously rejected off the pores of said matrix (40), when said chamber is subjected to an external mechanical pressure lower than a second pressure level P2 which is lower than said first pressure level P1, said energy absorbing-dissipating structures (28, 30) being provided on either side of said strain transmitting means (36, 36a, 36b, 60, 62) such that said first element can bias said structures (28, 30) in two respective opposite directions (64, 66).

9. An engine for a space launcher, including at least one jet nozzle, **characterised in that** it comprises at least one electromechanical actuator (10) according to any of the preceding claims to provide the support and steering for said jet nozzle.

10. A stage of a space launcher, **characterised in that** it comprises at least one engine according to claim 9.

11. A space launcher, **characterised in that** it comprises at least one stage according to claim 10.
